# EUROPEAN PATENT SPECIFICATION

(11) **EP 2 508 783 B1**
(45) Date of publication and mention of the grant of the patent: **14.05.2014**
(21) Application number: 11161732.0
(22) Date of filing: 08.04.2011
(51) Int. Cl.: F16L 37/091, F16L 37/092

(54) **Pipe coupling**
Rohrkupplung
Raccord de tuyaux

(43) Date of publication of application: 10.10.2012
(73) Proprietor: Aronkasei Co., Ltd., Tokyo 141-0022 (JP)
(72) Inventor: Ota, Hiroshi, Tokai-shi Aichi (JP); Mizuno, Hirotoshi, Tokai-shi Aichi (JP); Kitajima, Norikazu, Tokai-shi Aichi (JP); Nakai, Yoshitaka, Tokai-shi Aichi (JP); Hasegawa, Hirokazu, Tokai-shi Aichi (JP)
(74) Representative: Reitstötter - Kinzebach

(56) References cited:
- EP-A1- 0 460 791
- EP-A1- 1 296 089
- EP-A1- 2 169 293
- WO-A1-2006/135227
- JP-A- 2009 019 645
- JP-A- 2010 230 094

## Description

### Field of the Invention

The present invention relates to a pipe coupling for connecting one or more pipes in one-touch operation comprising means for confirming whether a pipe has been inserted in place. More particularly, it relates to a pipe coupling comprising an outer tubular member and an inner tubular member defining a space for receiving a pipe to be connected between said inner and outer tubular members wherein said confirmation means provides visual confirmation whether a pipe has been inserted in said space at a predetermined position.

### Background Art

Various types of one-touch pipe coupling have already been known including JP(U) 04/18793A, JP2001/193883A and JP2003/227592A. These pipe couplings comprise an inner tubular member and an outer tubular member concentrically disposed around the inner tubular member. The outer tubular member defines a tapered inner circumferential surface which axially extends toward a pipe-insertion opening. A tubular lock ring having a plurality of dents or pawls is slidably received between the outer and inner tubular members. In use, a pipe to be coupled is inserted into the coupling to the fullest extent and then slightly pulled back until the lock ring reaches a position near the inlet opening of pipe whereupon the dents or pawls are urged against the outer surface of pipe by the interaction with the tapered inner surface of the outer tubular member to block the pipe from withdrawal.

JP2005/172218A discloses a similar one-touch pipe coupling dispensed with the inner tubular member for supporting the pipe inserted within the coupling radially inwardly.

WO 2006/135227 discloses another type of one-touch pipe coupling comprising an outer sleeve and an inner sleeve each having a tapered annular surface for narrowing the width of pipe-insertion opening, and an inner grip ring and an outer grip ring concentrically disposed around the inner sleeve, the outer grip ring and the inner grip ring being connected to one another and delimiting an annular space for receiving an end of pipe at the remotest position from the pipe-insertion opening.

One-touch pipe couplings of another type comprising axially non-movable lock rings are disclosed in JP 09/236190A, JP 2006/118704A and JP 2008/164074A. The pipe couplings of this type comprise an inner tubular member integrally formed with the coupling main body and an outer tubular member concentrically disposed around the inner tubular member for defining a chamber for receiving an end of pipe to be connected, and an annular lock ring fixedly secured on the outer surface of inner tubular member. A plurality of dents or pawls protrude radially outwardly from the outer surface of inner tubular member for preventing withdrawal of the pipe from the coupling by being forced against the inner surface of the pipe.

A similar type of pipe couplings is disclosed in JP 2002/106772A and JP 2003/307290A. In these pipe couplings, a plurality of dents or pawls protrude radially inwardly from the inner surface of outer tubular member so that the plurality of dents or pawls are forced against the outer surface of pipe inserted into the coupling.

We have disclosed in JP 2010/230094A a one-touch pipe coupling comprising axially movable lock rings wherein the lock ring strips are radially curved so that the lock ring strips are elongated axially upon applying pressure radially. The curved lock ring strips are deformed upon insertion of pipe into the coupling so that a pawl at the free end of each lock ring strip is forced against the outer or inner surface of the pipe.

EP 1 296 089 A1 describes a pipe coupling comprising a main body, an inner tubular member extending from the main body axially outwardly, an outer tubular member concentrically surrounding the inner tubular member for defining a space for accommodating an end of pipe in cooperation with the inner tubular member, and means for confirming the state of pipe inserted into said pipe coupling and wherein said confirmation means comprises at least one bore defined through the wall of said outer tubular member and a confirmation member having a C-ring or O-ring shape received in said accommodation space and carrying at least member which projects out of said bore before inserting a pipe and is pulled inside the outer tubular member as when said pipe is inserted.

All of the pipe couplings discussed above are used for coupling one or more pipes made of plastic materials or an aluminum pipe having inner and outer plastic lining layers. In use, the pipe is inserted into the pipe coupling by advancing until an end of pipe is reached a predetermined position. Thereafter, the pipe may be retracted until the pipe is securely locked by the pawls on the lock ring. If the pipe is not locked in place in the pipe coupling, the pipe may easily be detached or not completely sealed within the pipe coupling.

Generally, it would be easy to confirm that the pipe has simply been inserted in the pipe coupling. However, it is not easy to confirm that the inserted pipe has been retained in the pipe coupling at a predetermined position. Therefore, the pipe may often be stopped before reaching the predetermined position or subjected to continued pushing load with risks of damaging or destroying the pipe coupling or the pipe itself although the pipe has already been reached the predetermined position.

Means for confirming the pipe retained in in the pipe coupling at a predetermined position have been known. JP 11/132374A discloses a pipe coupling having a window formed on the outer tubular member for allowing visual inspection of the distal end of inserted pipe retained at a predetermined position.

Another type of means for confirming the inserted pipe is disclosed in JP(U) 06/62292A, JP 2001/324071A and JP 2002/089759A comprising a rod-shaped confirmation member loosely fitted in a bore defined through the outer tubular wall. The rod member is pushed out of the bore by the distal end of advancing pipe from normally retracted position. A still other type of confirmation means is disclosed in JP 2009/019645A wherein the rod member resting on the circumference of a seal ring normally projects out of the bore. When a pipe is inserted into the pipe coupling, the seal ring is advanced by the distal end of pipe to pull the rod-like member within the bore.

The means for confirming the position of pipe inserted into the pipe coupling taught in the prior art allow, however, the visual inspection of pipe only when the distal end is advanced to a position where the viewing window or the bore for said rod member is formed through the outer tubular member and do not allow the visual inspection of pipe retained at other positions such as, for example, at the middle or the most advanced position.

Moreover, the pipe couplings known in the prior art of the type allowing the confirmation of inserted pipe do not allow the confirmation in the dark or in a closed space. In cases where a rod member is fitted in a bore formed through the outer tubular member, the length of rod member or the depth of bore cannot be large enough for allowing the operator to confirm whether the pipe is at a predetermined position without inspecting how long the rod member is projecting from or retracted into the bore.

### List of Cited Prior Art

JP(U) 04/18793A, JP2001/193883A, JP2003/227592A, JP2005/172218A, WO 2006/135227, JP 09/236190A, JP 2006/118704A, JP 2008/164074A, JP 2002/106772A, JP 2003/307290A, JP 2010/230094A, JP 11/132374A, JP(U) 06/62292A, JP 2001/324071A, JP 2002/089759A and JP 2009/019645A.

### Brief Summary of the Invention

It is, therefore, an object of the present invention to provide a one-touch pipe coupling which is simple in the insertion and connection operation and comprising means for confirming easily and accurately whether the distal end of inserted pipe has reached a predetermined position within the pipe coupling.

As a result of intensive efforts and study, we have found that the above object may be accomplished with success by providing, in accordance with the present invention, a pipe coupling comprises a C·shaped or O-shaped ring carrying a radially extending rod-member placed in a space or chamber for accommodating a pipe to be connected with said rod member projecting out of a bore radially extending through the outer tubular member to communicate with said space. The position of the distal end of pipe and thus the position of said bore relative to the length of said space may be varied as desired by adjusting the length of said rod member.

According to the present invention, there is provided a pipe coupling comprising a main body, an outer tubular member and an inner tubular member, the inner and outer tubular members defining a space for accommodating an end of pipe in cooperation with the inner tubular member, and means for confirming the state of the pipe inserted into the pipe coupling wherein said confirmation means comprise, at least one bore defined in said outer tubular member radially extending through the inner surface and the outer surface thereof, at least one groove axially extending from said bore inwardly and defined on the inner surface of said outer tubular member, and a confirmation member having a C-ring or O-ring shape axially slidably received in said accommodation space and carrying at least one rod member radially extending from the peripheral edge thereof characterized in that said rod-shaped member projects out of said bore before inserting a pipe, and that said rod-shaped member is retracted through said bore into said groove on the inner surface of the outer tubular member when a pipe is inserted into said space and said confirmation member is pushed axially inwardly within said receiving space by the distal end of pipe.

In the one-touch pipe coupling comprising means for confirming the inserted pipe according to the present invention, a C-shaped or O-shaped ring carrying a rod member is initially located in the space for accommodating the pipe with the rod member projecting out of the bore before inserting a pipe. Thus, the C-shaped or O-shaped ring carrying the rod member is retained at a position just below the bore. The length of rod member initially projecting out of the bore may be altered as far as the operator can confirm that rod member is initially projecting out of the bore for a predetermined length.

When a pipe is inserted into the space, the C-shaped or O-shaped ring occupying the cross-sectional area of the space is pushed by the distal end of pipe up to the terminal wall of the space. At the same time, the rod member carried by the ring is pulled into the space through the bore and received in the groove defined on the inner surface of the outer tubular member.

Then the operator is allowed to confirm visually or by a finger that the rod member is absent in the bore and the distal end of pipe has been reached the predetermined position.

Accordingly, the length of rod member is adjusted to be substantially equal to the distance between the bore and the position of the distal end of pipe taken when the insertion process has been finished whereupon the rod member has been entirely retracted inside the bore and received in the groove. As will be apparent, the location of the bore relative to the accommodation space does not need to be fixed but can be changed by adjusting the length of rod member to the distance between the bore and the position of the distal end of inserted pipe.

The C-ring or O-ring member may carry two or more rod members on the circumferential edge. In this case, the outer tubular member must have the corresponding number of bores at the corresponding circumferential positions.

It is not necessary that the length of the rod member is strictly equal to the distance between the bore and the distal end of pipe taken when the pipe has been inserted in the accommodation space to the fullest extent. A variation for compensating for the variations in the wall thickness of outer tubular member, the elongation and curvature of rod member when pulling inside the outer tubular member.

In the present invention, a groove is defined on the inner surface of outer tubular member extending from the bore axially inwardly for receiving the rod member retracted into the accommodation place for the pipe. If the groove is absent, the rod member pulled into the accommodation space will prevent further advancement of the pipe or the rod member will be torn away from the ring member by the distal end of pipe.

Accordingly, a groove is needed for receiving the rod member retracted into the accommodation space for the inserted pipe rather than utilizing a gap between the inner surface of outer tubular member and the outer surface of a pipe to be connected. If the gap is utilized, the pipe is allowed to tilt irregularly making firm securing of the pipe difficult. When the inner surface of outer tubular member is provided with a groove for receiving retracted rod member, the inner diameter of outer tubular member can be substantially same as the outer diameter of pipe so that the pipe is firmly retained in the accommodation space for inserted pipe. In an embodiment, a plurality of axially extending ribs each having a top surface which is substantially flush with the outer surface of inserted pipe are formed on the inner surface of outer tubular member to define a plurality of grooves between the ribs for receiving retracted rod member.

In another embodiment, a sleeve having an inner diameter substantially equal to the outer diameter of a pipe to be connected and having an axially extending slit is snugly fitted inside the outer tubular member having an inner diameter greater than the outer diameter of pipe. The axially extending slit is used for receiving the rod member when retracted.

The sleeve is normally circular or of O-shape in cross-section for snug fitting inside the outer tubular member. However, the sleeve may be of on-continuous circular shape or of C-shape in cross-section to facilitate the fitting inside the outer tubular member by decreasing the diameter.

The use of above sleeve enables the outer tubular member to be molded easily and also allows easy attachment of various parts including means for confirming the position of inserted pipe, lock rings and seal rings. When the pipe coupling comprises a lock ring as will be disclosed later, a terminal wall for limiting the axial movement of lock ring may easily be formed on the inner surface of outer tubular member by the sleeve.

The rod member projecting out of the bore is retracted and received in the groove on the inner surface of outer tubular member as the ring member carrying the rod member advances axially inwardly while being bent angularly at the corner between the bore and the axially extending groove. The rod member as well as the ring member are preferably fabricated from a flexible material having a high tensile strength such as thermoplastic elastomers, synthetic rubber or natural rubber. Thermoplastic elastomers are particularly preferable by virtue of relatively low modulus of elongation and are suited for fabricating the rod member which requires to flex while retaining a length corresponding to the distance up to the distal end of inserted pipe.

The rod member may be a flat sheet to be highly flexible or may be formed in a hinge structure at the proximal end connected to the ring member by thinning or otherwise reducing the cross-sectional area at the proximal end. The hinge structure is effective to impart the rod member with ability of easily bending at the proximal end when initially pulling inside the outer tubular member.

The distal end of rod member may be of any shape but may have a sharp tip or irregular surface for facilitating the confirmation of the distal end when touched with a finger. Alternatively, the rod member or the distal end thereof may have a fluorescent or colored marker to facilitate visual inspection.

In an embodiment, the means for confirming the inserted pipe is provided in a pipe coupling comprising:
a main body;
an inner tubular member extending from the main body in axially outer direction and having a radially outwardly extending terminal wall and a tapered annular wall inclining outwardly in axially outer direction;
an outer tubular member concentrically surrounding the inner tubular member, the inner and outer tubular members defining a space for accommodating an end of pipe therebetween; and
a tubular inner lock ring having a plurality of cantilever strips each having a free end separated by a plurality of axially extending slits, the inner lock ring carrying a plurality of radially outwardly protruding first pawls for applying a pressure against the inner surface of said pipe upon elastic deformation of the inner lock ring and a plurality of radially outwardly protruding second pawls at said free end for locking said pipe when withdrawing the pipe, said inner lock ring being movable in said space for accommodating the pipe between said terminal wall and said tapered annular wall;
characterized in that, when said pipe is inserted in said space for accommodating the pipe in place and then moved in a direction for withdrawing the pipe, said inner lock ring is moved together with the pipe in the same direction as a consequence of the engagement of said outwardly protruding first pawls with the inner surface of said pipe, and the free end of said inner lock ring overlies on said tapered annular wall area whereby said inner lock ring is expanded radially outwardly to urge said outwardly protruding second pawls against the inner surface of said pipe.

In another embodiment, the means for confirming the inserted pipe is provided in a pipe coupling comprising:
a main body;
an inner tubular member extending from the main body in axially outer direction;
an outer tubular member surrounding the inner tubular member and having a radially inwardly extending terminal wall and a tapered annular wall inclining inwardly in axially outer direction, the inner and outer tubular members defining a space for accommodating an end of pipe therebetween; and
a tubular outer lock ring having a plurality of cantilever strips each having a free end separated by a plurality of axially extending slits, the outer lock ring carrying a plurality of radially inwardly protruding first pawls for applying a pressure against the outer surface of said pipe upon elastic deformation of the outer lock ring and a plurality of radially inwardly protruding second pawls at said free end for locking said pipe when withdrawing the pipe, said outer lock ring being movable in said space for accommodating the pipe between said terminal wall and said tapered annular wall;
characterized in that, when said pipe is inserted in said space for accommodating the pipe in place and then moved in a direction for withdrawing the pipe, said outer lock ring is moved together with the pipe in the same direction as a consequence of the engagement of said inwardly protruding first pawls with the outer surface of said pipe, and the free end of said outer lock ring overlies on said tapered annular wall area whereby said outer lock ring is shrinked radially inwardly to urge said inwardly protruding second pawls against the outer surface of said pipe.

In a still other embodiment, the means for confirming the inserted pipe is provided in a pipe coupling comprising:
a main body;
an inner tubular member extending from the main body in axially outer direction and having a radially outwardly extending terminal wall and a tapered annular wall inclining outwardly in axially outer direction;
an outer tubular member surrounding the inner tubular member and having radially inwardly extending terminal wall and a tapered annular wall inclining inwardly in axially outer direction, the inner and outer tubular member defining a space for accommodating an end of pipe therebetween;
a tubular inner lock ring having a plurality of cantilever strips each having a free end separated by a plurality of axially extending slits, the inner lock ring carrying a plurality of radially outwardly protruding first pawls for applying a pressure against the inner surface of said pipe upon elastic deformation of the inner lock ring and a plurality of radially outwardly protruding second pawls at said free end for locking said pipe when withdrawing the pipe, said inner lock ring being movable in said space for receiving the pipe between said terminal wall and said tapered annular wall; and
a tubular outer lock ring having a plurality of cantilever strips each having a free end separated by a plurality of axially extending slits, the outer lock ring carrying a plurality of radially inwardly protruding first pawls for applying a pressure against the outer surface of said pipe upon elastic deformation of the outer lock ring and a plurality of radially inwardly protruding second pawls at said free end for locking said pipe when withdrawing the pipe, said outer lock ring being movable in said space for accommodating between said terminal wall and said tapered annular wall;
characterized in that, when said pipe is inserted in said space for accommodating the pipe in place and then moved in a direction for withdrawing the pipe, said inner lock ring is moved together with the pipe in the same direction as a consequence of the engagement of said outwardly protruding first pawls with the inner surface of said pipe, and the free end of said inner lock ring overlies on said tapered annular wall area whereby said inner lock ring is expanded radially outwardly to urge said outwardly protruding second pawls against the inner surface of said pipe; and said outer lock ring is moved together with the pipe in the same direction as a consequence of the engagement of said inwardly protruding first pawls with the outer surface of said pipe, and the free end of said outer lock ring overlies on said tapered annular wall area whereby said outer lock ring is shrinked radially inwardly to urge said inwardly protruding second pawls against the outer surface of said pipe.

In cases where the pipe coupling comprises an inner lock ring and/or an outer lock ring, the main body and the inner and outer tubular members have generally cylindrical shape. The main body and the inner tubular member may be molded integrally to define a fluid passage opening therein. The distal end of the passage opening preferably has a funnel shape for decreasing the flow resistance of fluid. All of the main body and the inner and outer tubular members may preferably be molded integrally in one piece for increasing the productivity and for saving the production cost.

In cases where the outer tubular member is a discrete part of the main body, the outer tubular member may be attached to the main body by either interference fitting or loose fitting to allow relative rotation. In the latter case, it is possible to relieve a bending or rotational force applied to the pipe during or after connection.

The materials from which the main body, inner and outer tubular members are fabricated may be chosen from relatively rigid materials such as rigid plastics or metals. Preferable plastics include polyphenylene sulfone (PPSU) and polyphenylene sulfide (PPS) resins.

The outer tubular member is concentrically disposed around the inner tubular member integrally molded with the main body to define a space or chamber for accommodating an end of pipe to be connected. Within the space or chamber, a lock ring having first pawls for pressing the pipe end when the pipe is inserted and second pawls for locking the pipe is disposed in axially movable manner when the connected pipe is pulled in a direction for withdrawing. The lock ring may be provided either on the outer surface of inner tubular member or inner surface of outer tubular member alone. However, the lock ring is preferably provided on both of the outer surface of inner tubular member and the inner surface of outer tubular member. This assures firm gripping of pipe when a force is exerted in a direction to withdraw the pipe.

In order to dispose an inner lock ring, the outer surface of inner tubular member is provided with a radially extending terminal wall and an inclined annular surface for progressively increasing the diameter of inner tubular member axially outwardly. Similarly, the inner surface of outer tubular member is provided with a radially extending terminal wall and an inclined annular surface for progressively decreasing the diameter of outer tubular member axially outwardly. The inner and outer lock rings are disposed between the respective terminal wall and inclined annular surface and, therefore, the axial movement in one direction is restricted by the terminal wall while allowing the axial movement in the other direction by an interaction with the inclined annular surface. The free ends of inner and outer lock rings are thus positioned axially outwardly from the terminal wall and have second pawls at the free ends.

The inner lock ring disposed around the outer surface of inner tubular member is of generally tubular or barrel shape having a bulged portion. A plurality of axially extending slits are formed at one end to separate the inner lock ring into a plurality of cantilever strips. The inner lock ring comprises a plurality of radially outwardly protruding first pawls and a plurality of radially outwardly protruding second pawls each carried by the cantilever strip at its free end. The first pawls are urged against the inner surface of pipe by elastic deformation of the inner lock ring when the pipe is inserted. The second pawls function to lock the pipe when pulling the pipe in a direction for withdrawing.

The bulged portion of the inner lock ring is thus deformed radially inwardly upon applying a force for squeezing the diameter. When releasing the squeezing force, the inner lock ring applies a pressure on the inner surface of the connected pipe. Since the bulged portion is also separated into a plurality of axially extending strips, each strip is more deformable in the bulged portion carrying a first pawl than in the free end thereof.

As a result, when a pipe is inserted into the pipe accommodation space or chamber in position and then pulled back, the first pawls are urged against the inner surface of pipe to entrain the inner lock ring with the movement of inserted pipe. At the same time, the free end of inner lock ring is displaced over the inclined annular surface and expanded radially outwardly whereby the plurality of second pawls are forced against the inner surface of inserted pipe.

In the pipe coupling of the above type, a plurality of outwardly protruding first pawls are thus carried by the inner lock ring at the bulged portion thereof to apply a pressure on the inner surface of inserted pipe, while a plurality of outwardly protruding second pawls are carried at the free end of inner lock ring such that the second pawls are normally not contacted under pressure with the inner surface of inserted pipe. Accordingly, a pipe may easily be inserted into the pipe coupling but steadily and firmly locked by the interaction between the second pawls and the inclined annular wall when the pipe is pulled in a direction for withdrawing.

Similar to the inner lock ring, the outer lock ring disposed around the inner surface of outer tubular member is of generally tubular or cylindrical shape having a shrinked portion. A plurality of axially extending slits are formed at one end to separate the outer lock ring into a plurality of cantilever strips. The outer lock ring comprises a plurality radially inwardly protruding first pawls and a plurality of radially inwardly protruding second pawls each carried by the cantilever strip at its free end. The first pawls are urged against the outer surface of pipe by elastic deformation of the outer lock ring when the pipe is inserted. The second pawls function to lock the pipe when pulling the pipe in a direction for withdrawing.

The shrinked portion of the outer lock ring is thus deformed radially outwardly upon applying a force for expanding the diameter. When releasing the expanding force, the outer lock ring applies a pressure on the outer surface of the connected pipe. Since the shrinked portion is also separated into a plurality of axially extending strips, each strip is more deformable in the shrinked portion carrying a first pawl than in the free end thereof.

As a result, when a pipe is inserted into the pipe accommodation space or chamber in position and then pulled back, the first pawls are urged against the outer surface of pipe to entrain the outer lock ring with the movement of inserted pipe. At the same time, the free end of outer lock ring is displaced over the inclined annular surface and squeezed radially inwardly whereby the plurality of second pawls are forced against the outer surface of inserted pipe.

In the pipe coupling of the above type, a plurality of inwardly protruding first pawls are thus carried by the outer lock ring at the shrinked portion thereof to apply a pressure on the outer surface of inserted pipe, while a plurality of inwardly protruding second pawls are carried at the free end of outer lock ring so that normally the second pawls are not contacted under pressure with the outer surface of inserted pipe. Accordingly, a pipe may easily be inserted into the pipe coupling but steadily and firmly locked by an interaction between the second pawls and the inclined annular wall when the pipe is pulled in a direction for withdrawing.

In an embodiment, the pipe coupling is provided with both of an inner lock ring and an outer lock ring. In this embodiment, the first pawls on the inner lock ring and the first pawls on the outer lock ring may be disposed one another either in axially displaced positions or radially aligned positions to apply a pressure on the inserted pipe. Similarly, the second pawls on the inner lock ring and the second pawls on the outer lock ring may be disposed one another either in axially displaced positions or radially aligned positions to lock the inserted pipe.

The means for confirming the inserted pipe according to the present invention is applicable not only to the pipe couplings of the type having an inner lock ring and/or an outer lock ring as described above. The means for confirming the inserted pipe may be formed in the pipe couplings of other types, for example, in a pipe coupling comprising a main body, an inner tubular member extending from the main body, and an outer tubular member concentrically surrounding the inner tubular member to define a space or chamber for accommodating an end of pipe between the outer and inner tubular members, as well as an annular lock ring secured on the outer surface of inner tubular member or the inner surface of outer tubular member and having a plurality of radially extending dents or pawls to be urged against the inner or outer surface of pipe, or a pipe coupling comprising an inner tubular member, an outer tubular member concentrically surrounding the inner tubular member and a tubular lock ring having a plurality of dents or pawls axially movably disposed between the inner and outer tubular members wherein the outer tubular member defines a tapered annular wall inclining outwardly toward the opening for inserting a pipe to depress said lock ring radially inwardly when moved over the tapered wall. The means for confirming the inserted pipe may also be applicable to a pipe coupling of the type wherein a lock ring is not present in the space defined between the inner and outer tubular members.

The pipe coupling according to the present invention preferably comprises one or more seal rings to seal the gap between the inner tubular member and the pipe and/or the gap between the outer tubular member and the pipe. The seal ring may be fixedly received in an annular groove formed on the outer surface of inner tubular member and/or the inner surface of outer tubular member. The cross-sectional shape or contour of seal ring may be circular, rectangular, concave, lip or other shapes.

A high sealing effect may be accomplished when the pipe coupling comprises a movable inner lock ring and/or a movable outer lock ring owing to the fact that the integrity of outer or inner surface of pipe is kept intact without being injured by the pawls of the lock ring when inserting the pipe as in the case of prior art pipe couplings having a movable or fixed lock ring.

In another aspect, the present invention provides a one-touch pipe coupling comprising a main body, an inner tubular member extending from the main body axially outwardly, an outer tubular member concentrically surrounding the inner tubular member for defining a space for accommodating an end of pipe in cooperation with the inner tubular member, the outer tubular member defining at least one bore through the wall thereof and at least one groove axially extending from said bore inwardly and on the inner surface thereof,
a lock ring having a plurality of pointed pawls for preventing the withdrawal of said pipe by being urged against the inner and/or outer surface of said pipe, and
a confirmation member having a C-ring or O-ring shape axially slidably received in said accommodation space and carrying at least one elongated rod member radially extending from the peripheral edge thereof. The elongated rod member projects out of the bore before inserting a pipe. When a pipe is inserted into said space, the ring of the confirmation is pushed axially inwardly as the pipe is advanced to retract the rod member inside the outer tubular member and to receive in the groove defined on the inner surface of outer tubular member whereupon it is confirmed that the pipe has been inserted in place. In the above arrangement, the confirmation point, namely the location of bore relative to the space for accommodation of pipe may be changed as desired by changing the length of rod member projecting out of the bore.

In the one-touch pipe coupling comprising means for confirming the inserted pipe according to the present invention, a C-shaped or O-shaped ring carrying a rod member is initially located in the space for accommodating the pipe with the rod member projecting out of the bore before inserting a pipe. Thus, the C-shaped or O-shaped ring carrying the rod member is retained at a position just below the bore. The length of rod member initially projecting out of the bore may be altered as far as the operator can confirm that rod member is initially projecting out of the bore for a predetermined length.

When a pipe is inserted into the space, the C-shaped or O-shaped ring occupying the cross-sectional area of the space is pushed by the distal end of pipe up to the terminal wall of the space. At the same time, the rod member carried by the ring is pulled into the space through the bore and received in the groove defined on the inner surface of the outer tubular member.

Then the operator is allowed to confirm visually or by a finger that the rod member is absent in the bore and the distal end of pipe has been reached the predetermined position.

Accordingly, the length of rod member is adjusted to be substantially equal to the distance between the bore and the position of the distal end of pipe taken when the insertion process has been finished whereupon the rod member has been entirely retracted inside the bore and received in the groove. As will be apparent, the location of the bore relative to the accommodation space does not need to be fixed but can be changed by adjusting the length of rod member to the distance between the bore and the position of the distal end of inserted pipe.

The C-ring or O-ring member may carry two or more rod members on the circumferential edge. In this case, the outer tubular member must have the corresponding number of bores at the corresponding circumferential positions.

It is not necessary that the length of the rod member is strictly equal to the distance between the bore and the distal end of pipe taken when the pipe has been inserted in the accommodation space to the fullest extent. A variation for compensating for the variations in the wall thickness of outer tubular member, the elongation and curvature of rod member when pulling inside the outer tubular member.

In the present invention, a groove is defined on the inner surface of outer tubular member extending from the bore axially inwardly for receiving the rod member retracted into the accommodation place for the pipe. If the groove is absent, the rod member pulled into the accommodation space will prevent further advancement of the pipe or the rod member will be torn away from the ring member by the distal end of pipe.

Accordingly, a groove is needed for receiving the rod member retracted into the accommodation space for the inserted pipe rather than utilizing a gap between the inner surface of outer tubular member and the outer surface of a pipe to be connected. If the gap is utilized, the pipe is allowed to tilt irregularly making firm securing of the pipe difficult. When the inner surface of outer tubular member is provided with a groove for receiving retracted rod member, the inner diameter of outer tubular member can be substantially same as the outer diameter of pipe so that the pipe is firmly retained in the accommodation space for inserted pipe. In an embodiment, a plurality of axially extending ribs each having a top surface which is substantially flush with the outer surface of inserted pipe are formed on the inner surface of outer tubular member to define a plurality of grooves between the ribs for receiving retracted rod member.

In another embodiment, a sleeve having an inner diameter substantially equal to the outer diameter of a pipe to be connected and having an axially extending slit is snugly fitted inside the outer tubular member having an inner diameter greater than the outer diameter of pipe. The axially extending slit is used for receiving the rod member when retracted.

The sleeve is normally circular or of O-shape in cross-section for snug fitting inside the outer tubular member. However, the sleeve may be of on-continuous circular shape or of C-shape in cross-section to facilitate the fitting inside the outer tubular member by decreasing the diameter.

The use of above sleeve enables the outer tubular member to be molded easily and also allows easy attachment of various parts including means for confirming the position of inserted pipe, lock rings and seal rings. When the pipe coupling comprises a lock ring as will be disclosed later, a terminal wall for limiting the axial movement of lock ring may easily be formed on the inner surface of outer tubular member by the sleeve.

The rod member projecting out of the bore is retracted and received in the groove on the inner surface of outer tubular member as the ring member carrying the rod member advances axially inwardly while being bent angularly at the corner between the bore and the axially extending groove. The rod member as well as the ring member are preferably fabricated from a flexible material having a high tensile strength such as thermoplastic elastomers, synthetic rubber or natural rubber. Thermoplastic elastomers are particularly preferable by virtue of relatively low modulus of elongation and are suited for fabricating the rod member which requires to flex while retaining a length corresponding to the distance up to the distal end of inserted pipe.

The rod member may be a flat sheet to be highly flexible or may be formed in a hinge structure at the proximal end connected to the ring member by thinning or otherwise reducing the cross-sectional area at the proximal end. The hinge structure is effective to impart the rod member with ability of easily bending at the proximal end when initially pulling inside the outer tubular member.

The distal end of rod member may be of any shape but may have a sharp tip or irregular surface for facilitating the confirmation of the distal end when touched with a finger. Alternatively, the rod member or the distal end thereof may have a fluorescent or colored marker to facilitate visual inspection.

According to the present invention, a C-shaped or O-shaped ring carrying a radially extending flexible rod member is slidably retained in the accommodation space for a pipe defined in the pipe coupling with the rod member projecting out of a bore. When a pipe is inserted into said space, the ring is pushed by the end of pipe so that the rod member is retracted inside the bore into said space as the ring advances axially inwardly. The length of the rod member projecting out of the bore determines how long the pipe has been inserted in the pipe accommodation space. Therefore, the location of the distal end of inserted pipe in said accommodation space may be determined as desired by changing the length of the rod member projecting out of the bore.

As a consequence, the operator is able to confirm that the end of pipe has reached a predetermined position by visually inspecting the bore or touching the bore with a finger.

### Brief Description of the Drawings.

Fig. 1 depicts a pipe coupling according to an embodiment of the present invention in cross-section taken along the center axis thereof showing a pipe before insertion into the pipe coupling in the upper half and the pipe after insertion in the lower half, respectively.
Fig. 2 is a perspective view of a confirmation member comprising a O-shaped ring to be retained in the space for accommodating inserted pipe into the pipe coupling shown in Fig. 1.
Fig. 3 is a perspective view of a sleeve attached to the inner surface of outer tubular member of the pipe coupling shown in Fig. 1.
Fig. 4 is a perspective view of a confirmation member comprising a C-shaped ring according to another embodiment.
Fig. 5 is a perspective view of a sleeve according to another embodiment.
Fig. 6 is a perspective view of an inner lock ring of the pipe coupling shown in Fig. 1.
Fig. 7 is a cross-sectional view of the inner lock ring shown in Fig. 6 taken along the center axis.
Fig. 8 is a perspective view of an outer lock ring of the pipe coupling shown in Fig. 1.
Fig. 9 is a cross-sectional view of the outer lock ring shown in Fig. 8 taken along the center axis.
Fig. 10 depicts a pipe coupling according to another embodiment of the present invention in cross-section taken along the center axis thereof showing a pipe before insertion into the pipe coupling in the upper half and the pipe after insertion in the lower half respectively.

### Detailed Description of the Preferred Embodiments

Now the pipe coupling of the present invention will be described in detail referring to the accompanying drawings. The present invention is, however, not limited to the embodiments to be described below but various modifications can be made thereto without departing from the scope and the principle of the present invention.

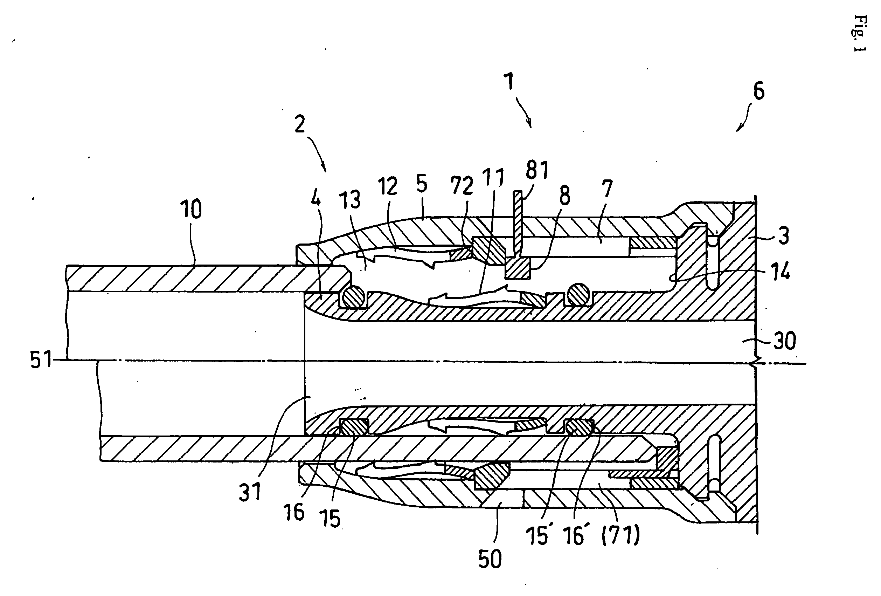

A one-touch typed pipe coupling according to a preferred embodiment of the present invention is shown in Fig. 1 in cross-section taken along the center axis. The upper half of the drawing shows the state of a pipe before insertion while the lower half shows the state of pipe after insertion. As will be easily appreciated, the pipe coupling 1 may comprise at least one socket 2 or two, three, or four sockets 2 in an I-shape, Y-shape or X-shape.

In the illustrated embodiment, the pipe coupling 1 comprises a main body 3, an inner tubular member 4, an outer tubular member 5, an inner lock ring 11 and an outer lock ring 12, all of generally tubular shape. The main body 3 and the inner tubular member 4 are molded integrally in one piece. A passage opening 30 is defined inside the main body 3 and the inner tubular member 4 for flowing a fluid. The distal end 31 of the passage is enlarged in a funnel shape to decrease the flow resistance. All of the main body 3, the inner tubular member 4 and the outer tubular member 5 may be molded integrally in one piece to increase the productivity and decrease the production cost.

The pipe coupling additionally comprises means for confirming an inserted pipe generally designated by the numeral 6. The confirmation means 6 include a bore 50 extending through the wall of outer tubular member 5, a sleeve 7 attached to the inner surface of outer tubular member 5, and a pipe-confirmation member 8. The confirmation means 6 allows an operator to confirm easily and accurately that the distal end of pipe 10 has reached a predetermined position in the pipe coupling 1 and the insertion process has been completed.

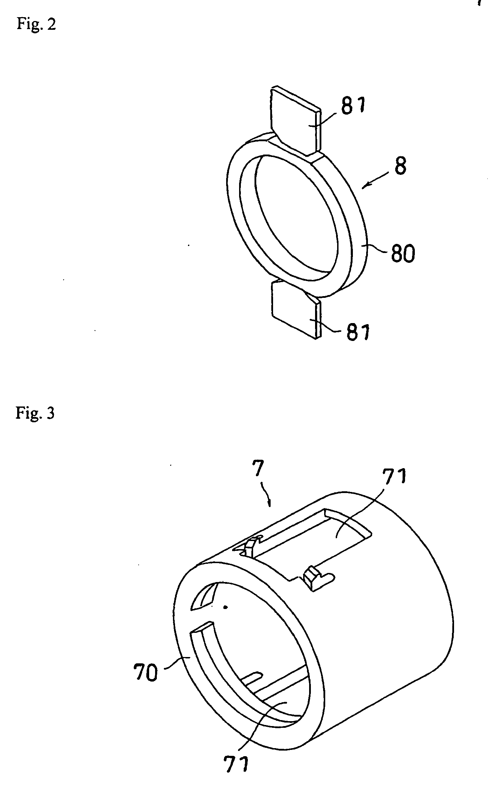

The pipe-confirmation member 8 to be placed in the accommodation space is shown in Fig. 2 in perspective view. The confirmation member 8 comprises an O-shaped ring 80 and a pair of flexible rods 81 radially extending from the O-shaped ring. The rod member 81 each projects out of the bore 50 when the O-shaped ring 80 has been initially located in the space 13 as shown in the upper half of Fig. 1. The O-shaped ring 80 is, therefore, located initially at a position radially aligned with bore 50 before inserting the pipe 10. The length of the rod member 81 initially projecting out of the bore 50 is adjusted to facilitate the confirmation of the advanced distance of pipe into the space 13.

The shape and the size of the bore 50 are not limited particularly but the location thereof on the outer tubular member must be determined by taking into account both of the distance between the bore 50 and the terminal wall 14 of the accommodation space 13 and the length of rod member 81 initially projecting out of the bore 50.

When a pipe is inserted into the space 13, the ring member 80 occupying the cross-sectional area of the space 13 is pushed up to the terminal wall 14 of the space by the advancing pipe end. The rod member 81 carried by the ring 80 is, at this time, pulled into the space 13 through the bore 50 and received in a groove 71 defined on the inner surface of outer tubular member 5 as shown in the lower half of Fig. 1.

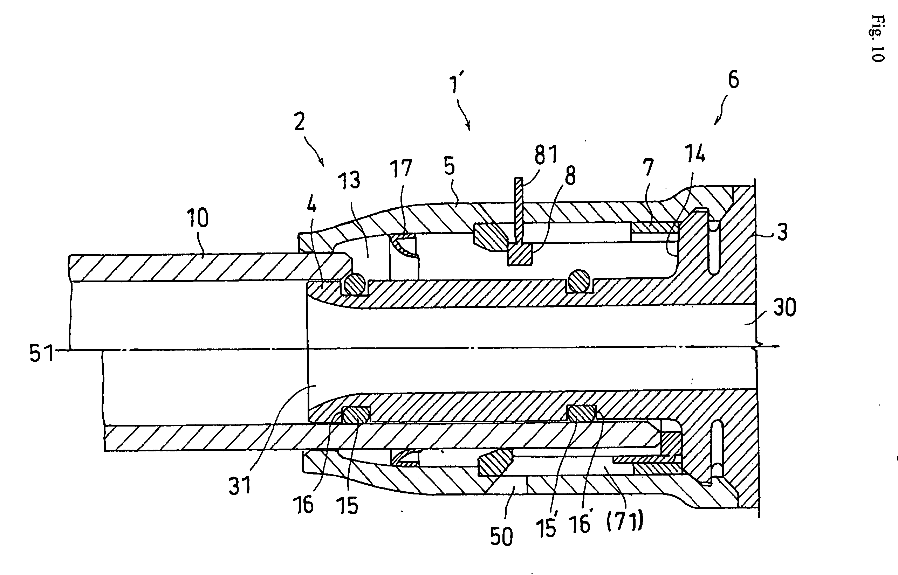

In the illustrated embodiment, the length of rod member 81 initially projecting out of the bore 50 is substantially equal to the distance between the bore 50 and the terminal wall 14 of the space 13. The full length of rod member initially projecting out of the bore 50 is retracted into the space 13 and received in the groove 71 defined on the inner surface of outer tubular member 5 whereupon no longer the rod member 81 projects out of the bore 50. In Figs. 1 and 10, the rod member 81 is shown to have a length short of the distance between the bore 50 and the terminal wall 14 of the space 13 for the convenience of showing the rod member 81 apparently. Accordingly, the location of the bore 50 relative to the accommodation space 13 does not need to be fixed but can be changed by adjusting the length of rod member 81 to the distance between the bore 50 and the position of the distal end of inserted pipe 10.

An operator can then confirm that the bore 50 is empty of the rod member 81 visually or by touching with a finger and knows that the pipe has reached up to the predetermined position and the pipe has been inserted in place.

In the illustrated embodiment, a pair of rod members 81 are carried symmetrically about the periphery of the ring 80 and a pair of bores 50 are defined symmetrically on the outer tubular member 5 each at a position corresponding to the rod member 81. The state of inserted pipe may be confirmed more accurately and more easily by using the above confirmation member 8.

The rod member 81 projecting out of the bore 50 is retracted in the pipe-accommodation space 13 and received in the groove 71 on the inner surface of outer tubular member 5 as the ring 80 carrying the rod member 81 advances axially inwardly while being bent angularly at the corner between the bore 50 and the groove 71. Because of this, the rod member 81 as well as the ring 80 are preferably fabricated from a flexible material having a high tensile strength. A thermoplastic elastomer is employed in this embodiment which has a relatively low modulus for elongation compared with synthetic or natural rubber. Accordingly, the thermoplastic elastomer is particularly suitable as the material of rod member 81 which requires to flex while retaining a length corresponding to the distance up to the distal end of pipe 10.

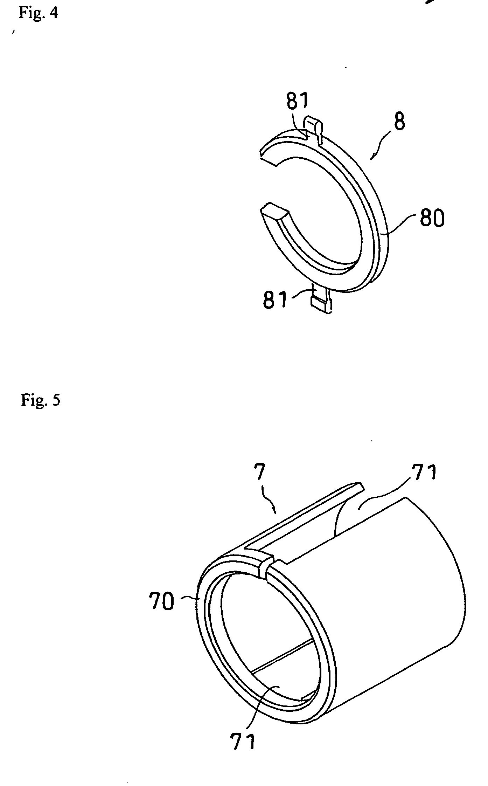

In order to impart the rod member 81 with a high flexibility, it may be constructed to have a flat cross-section or hinge-like structure having a narrowed width at an area close to the proximal end connected to the ring 80 as shown in Fig. 2 or a thinned thickness in the area close to the proximal end as shown in Fig. 4. The hinge-like structure is effective to impart the rod member 81 with a high bending property in the initial stage of retraction inside the bore 50.

The distal end of rod member 81 may have a sharp edge as shown in Fig. 4 or an irregular top surface to increase touch feeling with finger. The rod member or the distal end thereof may bear a fluorescent marker or otherwise colored marker.

A sleeve 7 to be mounted inside the outer tubular member 5 is shown in Fig. 3 in perspective view. The sleeve 7 is of cylindrical shape having an annular terminal surface 70 at both ends. A pair of axially extending slits 71 are cut out in the cylindrical wall at diametrically opposed positions. The sleeve 7 is fitted inside the outer tubular member 5 so that each slit 71 is aligned radially with the bore 50 of the outer tubular member 5. The outer tubular member 5 having a pair of grooves 71 axially extending from the said bore 50 is thus assembled.

If the outer tubular member 5 does not have grooves 71 on the inner surface, the rod member 81 will interfere with further advancing of the pipe into the accommodation space 13 or the rod member 81 will be torn away from the ring 80.

In the present invention, the groove 71 is used for receiving the rod member 81 when it is retracted into the accommodation space 13 rather than retracting the rod member 81 into a circumferential gap given between the inner surface of the outer tubular member 5 and the outer surface of the pipe 10 to be connected This is because the pipe is otherwise allowed to tilt irregularly within the gap and firm securing of the pipe becomes difficult.

In the illustrated embodiment, the inner diameter of outer tubular member 5 is larger than the outer diameter of the pipe 10 for accommodating the sleeve 7 having an inner diameter substantially equal to the outer diameter of the pipe 10. The sleeve 7 may be configured to have a cut out portion in the wall or C-shape in cross-section as shown in Fig. 5 to facilitate fitting inside the outer tubular member 5.

The use of sleeve 7 enables the outer tubular member 5 to be molded easily and also allows easy attachment of various parts including the pipe-confirming member 8 and the outer lock ring 12. When the pipe coupling comprises an outer lock ring 12, a terminal wall 72 for limiting its axial movement may be conveniently provided by the sleeve 7.

Referring to Fig. 1 again, an inner lock ring 11 and an outer lock ring 12 are attached axially movably within the space 13 for accommodating pipe 10. The inner lock ring 11 and the outer lock ring 12 each have a plurality of first pawls for urging or fastening the inserted pipe 10 when the pipe is inserted and a plurality of second pawls for locking the pipe from withdrawing. However, the lock ring does not need to be attached on both of the outer surface of inner tubular member 4 and the inner surface of outer tubular member 5 but it is sufficient that either one of inner or outer tubular member 4, 5 has the lock ring. Provision of a lock ring on both of inner and outer tubular members 4, 5 would be effective to be continued use of the pipe coupling even when either one of inner or outer lock rings is failed.

The outer surface of the inner tubular member 4 and the inner surface of outer tubular member 5 each have a radially extending terminal wall and a tapered annular wall inclining upward or downward axially outwardly. The inner and outer lock rings 11, 12 are mounted between the terminal wall and the tapered annular wall as shown in Fig. 1. As a consequence, the axial movement of the inner and outer lock rings in one direction is restricted by the terminal wall and allowed in the other direction until the free ends lie over the tapered annular wall.

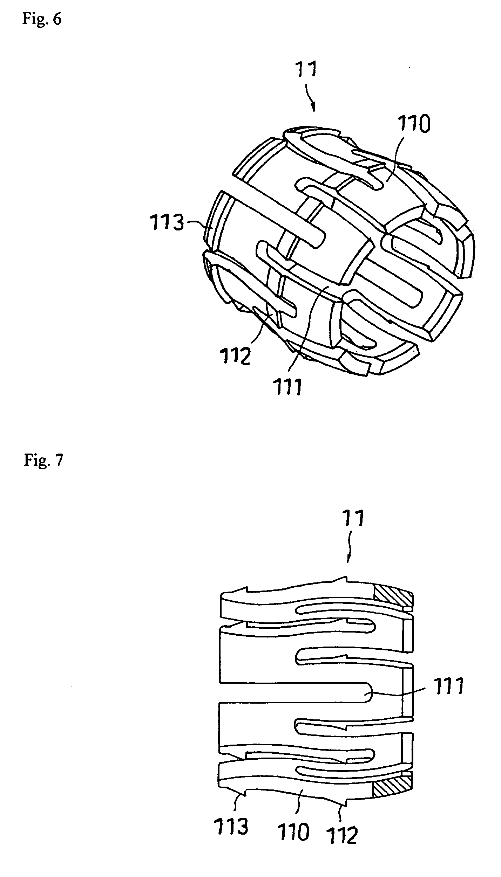

Figs. 6 and 7 show the inner lock ring 11 of the pipe coupling 1 in perspective view and cross-sectional view taken along the center axis, respectively.

The inner lock ring 11 mounted on the outer surface of the inner tubular member 4 is of generally tubular or barrel shape. A plurality of axially extending slits 111 are formed at one end to separate the inner lock ring 11 into a plurality of cantilever strips each having a free end. The inner lock ring 11 comprises a plurality of radially outwardly protruding first pawls 112 to be elastically deformed and urged against the inner surface of a pipe upon insertion into the pipe coupling 1 and a plurality of outwardly protruding second pawls 113 at the free end of each cantilever strip for locking the pipe from withdrawing.

The first pawls 112 are elastically deformable by fabricating the inner lock ring 11 itself from an elastically deformable material. The function of first pawls 112 for applying pressure against the inner surface of inserted pipe is accomplished by providing the inner lock ring 11 with a radially outwardly bulged portion 110 in the middle. The bulged portion 110 is deformed radially inwardly when pressed radially inwardly and applies a pressure against the inner surface of the inserted pipe 10 by a rebounding force. Since a plurality of slits 111 extend axially beyond the bulged portion 110, the separated cantilever strips are easily deformed in the bulged portion 110 without interfering one another. The outwardly protruding first pawls 112 are positioned axially inwardly relative to outwardly protruding second pawls 113 for maximizing the pressure applied on the inner surface of inserted pipe 10.

As a result, when a pipe 10 is inserted into the accommodation space 13 in place and then moved in the opposite direction, a plurality of outwardly protruding first pawls 112 are urged on the inner surface of pipe 10 to fasten the pipe 10 whereupon the inner lock ring 11 is moved together with pipe 10 in the same direction. At the same time, the free end of the inner lock ring 11 is advanced over the tapered wall. The inner lock ring 11 is forcibly deformed there by the interaction with the tapered wall to increase its diameter and urge a plurality of radially outwardly protruding second pawls 113 against the inner surface of the pipe 10.

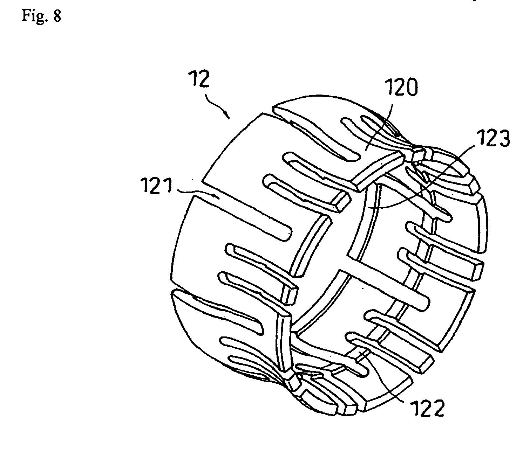

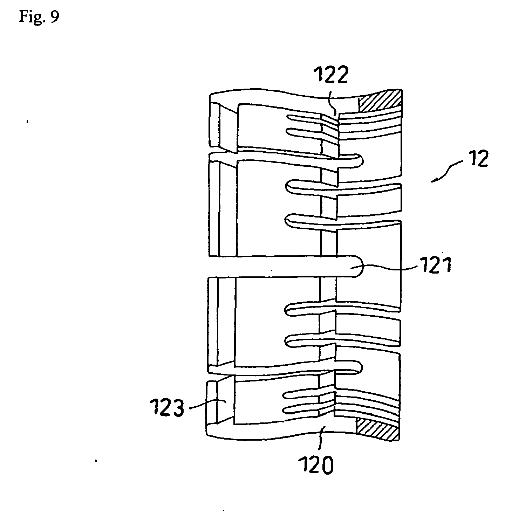

The outer lock ring 12 used in the pipe coupling 1 according to an embodiment of the present invention is shown in Figs. 8 and 9 in perspective view and a cross-sectional view taking along the center axis, respectively.

Similar to the inner lock ring 11, the outer lock ring 12 mounted on the inner surface of the outer tubular member 5 is of generally tubular or cylindrical shape. A plurality of axially extending slits 121 are formed at one end to separate the outer lock ring 12 into a plurality of cantilever strips each having a free end. The outer lock ring 12 comprises a plurality of radially inwardly protruding first pawls 122 to be elastically deformed and urged against the outer surface of a pipe upon insertion into the pipe coupling 1 and a plurality of radially inwardly protruding second pawls 123 at the free end of each cantilever strip for locking the pipe from withdrawing.

The first pawls 122 are elastically deformable by fabricating the outer lock ring 12 itself from an elastically deformable material. The function of first pawls 122 for applying a pressure against the outer surface of inserted pipe is accomplished by providing the outer lock ring 12 with a radially inwardly shrinked portion 120 in the middle. The shrinked portion 120 is deformed radially outwardly when pressed radially outwardly and applies a pressure against the outer surface of the inserted pipe 10 by a rebounding force. Since a plurality of slits 121 extend axially beyond the shrinked portion 120, the separated cantilever strips are easily deformed in the shrinked portion 120 without interfering one another. The inwardly protruding first pawls 122 are positioned axially inwardly relative to the inwardly protruding second pawls 123 for maximizing the pressure applied on the outer surface of inserted pipe 10.

As a result, when a pipe 10 is inserted into the accommodation space 13 in place and then moved in the opposite direction, a plurality of inwardly protruding first pawls 122 are urged on the outer surface of pipe 10 to fasten the pipe 10 whereupon the outer lock ring 12 is moved together with pipe 10 in the same direction. At the same time, the free end of the outer lock ring 12 is advanced over the tapered wall. The outer lock ring 12 is forcibly deformed there by the interaction with the tapered wall to decrease its diameter and urge a plurality of radially inwardly protruding second pawls 123 against the outer surface of the pipe 10.

The lock rings 11 and 12 for accomplishing the above functions are fabricated from a rigid material having a suitable degree of elasticity such as metals or plastics. When a plastic material is chosen, so-called engineering plastics such as polyphenylene sulfone (PPSU) or polyphenylene sulfide (PPS) are preferred.

In the illustrated embodiment, the pipe coupling 1 comprises a pair of seal rings 15 and 15' on the outer surface of the inner tubular member 4 to hermetically seal the gap between the inserted pipe 10 and the outer surface the inner tubular member 4. The seal rings 15 and 15' are secured in a pair of annular grooves 16 and 16' formed on the outer surface of the inner tubular member 4. The cross-sectional shape or contour of the seal rings is circular in this embodiment.

One or more seal rings may be provided on the outer surface of the inner tubular member 4 or on the inner surface of the outer tubular member 5 or on both surfaces. In the illustrated embodiment, a pair of seal rings 15 and 15' are disposed on the outer surface of the inner tubular member 4 to effectively prevent dust or other foreign matters from entering the interior of connected pipe. The seal rings 15 and 15' are also effective to prevent the exposed end of three layered aluminum pipe from corrosion.

The seal ring 15 is located at a position opposite to the second pawls 123 of the outer lock ring 12. This location of the seal ring 15 enhances the sealing effect with the aid of fastening force of the second pawls 123 of the outer lock ring 12. In the illustrated embodiment, the seal rings 15 and 15' are positioned on the outer surface of inner tubular member 4 at spaced apart positions so that the inner lock ring 11 may be mounted between them.

A one-touch typed pipe coupling 1' according to another embodiment is shown in Fig. 10 in cross-sectional view taken along the center axis wherein the upper half shows the state before inserting a pipe and the lower half shows the state after the pipe has been inserted. As will be appreciated, the pipe coupling 1' shown in Fig. 10 is identical in the structure with the pipe coupling 1 shown in Fig. 1 except that the pipe coupling 1' has only one the lock ring 17 for locking the inserted pipe 10 fixedly secured on the inner surface of the outer tubular member 5.

The pipe coupling 1' includes a main body 3, an inner tubular member 4, an outer tubular member 5, a fixed outer lock ring 17, and the means 6 for confirming the inserted pipe, all of generally tubular shape. In the embodiment shown in Fig. 10, the main body 3 and the inner tubular member 4 are integrally molded in one piece. A fluid passage opening 30 is defined through the main body 3 and the inner tubular member 4. The both ends of the passage opening each have a funnel shape to decrease the flow resistance of fluid. All of the main body 3, the inner tubular member 4 and the outer tubular member 5 may also be integrally molded in one piece for increasing the productivity and for saving the production cost.

The means 6 for confirming the inserted pipe 10 comprise a bore 50 defined through the wall of outer tubular member, a sleeve 7, and a member 8 for confirming the pipe received in the accommodation space 13 same as in the pipe coupling 1 shown in Fig. 1. Therefore, the function and construction of these parts are not described here repeatedly.

As shown in the upper half of Fig. 10, the confirmation member 8 is received inside the outer tubular member 5 with the rod member 81 projecting out of the bore 50 before the pipe 10 is inserted into the accommodation space 13. Then the operator is able to confirm that the pipe 10 has not been fully inserted visually or by touching with finger.

When the pipe 10 is inserted in the accommodation space 13 to the fullest extent, the confirmation member 8 occupying the space 13 is pushed forward by the distal end of pipe to the terminal wall 14 and therewith the rod member 81 is pulled inside the bore 50 and received in the groove or slit 71 defined by the sleeve 7 on the inner surface of outer tubular member 5.

Then the operator is able to confirm that the pipe 10 has been fully inserted in the pipe coupling 1' by visually inspecting or touching with finger the bore 50 now empty of the rod member 81.

### List of Reference Numerals

- 1, 1' :: pipe coupling
- 2 :: socket
- 3 :: main body
- 30 :: passage opening
- 31 :: distal end of a passage
- 4 :: inner tubular member
- 5 :: outer tubular member
- 50 :: bore
- 51 :: center axis
- 6 :: means for confirming a inserted pipe
- 7 :: sleeve
- 70 :: annular terminal surface of a sleeve
- 71 :: slits of a sleeve
- 8 :: confirmation member
- 80 :: ring of a confirmation member
- 81 :: rod member of a confirmation member
- 10 :: pipe
- 11 :: inner lock ring
- 110 :: radially outwardly bulged portion
- 111 :: slits of an inner lock ring
- 112 :: outwardly protruding first pawl
- 113 :: outwardly protruding second pawl
- 12 :: outer lock ring
- 120 :: radially inwardly shrinked portion
- 121 :: slits of an outer lock ring
- 122 :: inwardly protruding first pawl
- 123 :: inwardly protruding second pawl
- 13 :: accommodation space
- 14 :: terminal wall of an accommodation space
- 15, 15' :: seal ring
- 16, 16' :: annular groove
- 17 :: fixed outer lock ring

## Claims

1. A pipe coupling (1) comprising a main body (3), an inner tubular member (4) extending from the main body axially outwardly, an outer tubular member (5) concentrically surrounding the inner tubular member(4) for defining a space (13) for accommodating an end of pipe in cooperation with the inner tubular member (4), and means (6) for confirming the state of pipe inserted into said pipe coupling wherein said confirmation means (6) comprises:
at least one bore (50) defined through the wall of said outer tubular member (5);
at least one groove (71) axially extending from said bore inwardly and defined on the inner surface of said outer tubular member (5); and
a confirmation member (8) having a C-ring or O-ring shape axially slidably received in said accommodation space (13) and carrying at least one rod member (81) radially extending from the peripheral edge thereof, said rod member projecting out of said bore (50) before inserting a pipe and being pulled inside the outer tubular member (5) and received in said groove (71) as said confirmation member is pushed axially inwardly by the distal end of said pipe when said pipe is inserted.

2. The pipe coupling according to claim 1 wherein the confirmation position of said pipe relative to said accommodation space (13) can be changed as desired by adjusting the length of said rod member (81).

3. The pipe coupling according to claim 1 or 2
wherein said groove (71) is formed by fitting a sleeve (7) having at least one axially extending slit (71) inside said outer tubular member (5).

4. The pipe coupling according to claim 1 or 2
wherein said rod member (81) has a flat sheet shape in cross-section.

5. The pipe coupling according to claim 1 or 2
wherein said confirmation member (8) is made of a thermoplastic elastomer, or synthetic or natural rubber.

6. The pipe coupling according to claim 1 or 2
wherein at least one seal ring (15, 15') is provided on the outer surface of said inner tubular member (4) or on the inner surface of said outer tubular member (5) to hermetically seal between the pipe and said inner or outer tubular member.

7. The pipe coupling according to claim 1 or 2;
wherein said inner tubular member (4) has a radially outwardly extending terminal wall and a tapered annular wall inclining outwardly in axially outer direction; the inner and outer tubular members (4, 5) defining said space (13) for accommodating an end of pipe therebetween,
said pipe coupling further comprising a tubular inner lock ring (11) having a plurality of cantilever strips each having a free end separated by a plurality of axially extending slits (111), the inner lock ring (11) carrying a plurality of radially outwardly protruding first pawls (112) for applying a pressure against the inner surface of said pipe upon elastic deformation of the inner lock ring and a plurality of radially outwardly protruding second pawls (113) at said free end for locking said pipe when withdrawing the pipe, said inner lock ring (11) being movable in said space for accommodating the pipe between said terminal wall and said tapered annular wall;
wherein, when said pipe is inserted in said space (13) for accommodating the pipe in place and then moved in a direction for withdrawing the pipe, said inner lock ring (11) is moved together with the pipe in the same direction as a consequence of the engagement of said outwardly protruding first pawls (112) with the inner surface of said pipe, and the free end of said inner lock ring (11) overlies on said tapered annular wall area whereby said inner lock (11) ring is expanded radially outwardly to urge said outwardly protruding second pawls (113) against the inner surface of said pipe.

8. The pipe coupling according to claim 1 or 2,
wherein said outer tubular member (5) has a radially inwardly extending terminal wall and a tapered annular wall inclining inwardly in axially outer direction, the inner and outer tubular members (4, 5) defining said space (13) for accommodating an end of pipe therebetween,
said pipe coupling further comprising a tubular outer lock ring (12) having a plurality of cantilever strips each having a free end separated by a plurality of axially extending slits (121), the outer lock ring (12) carrying a plurality of radially inwardly protruding first pawls (122) for applying a pressure against the outer surface of said pipe upon elastic deformation of the outer lock ring (12) and a plurality of radially inwardly protruding second pawls (123) at said free end for locking said pipe when withdrawing the pipe, said outer lock ring (12) being movable in said space (13) for accommodating the pipe between said terminal wall and said tapered annular wall;
wherein, when said pipe is inserted in said space (13) for accommodating the pipe in place and then moved in a direction for withdrawing the pipe, said outer lock ring (12) is moved together with the pipe in the same direction as a consequence of the engagement of said inwardly protruding first pawls (122) with the outer surface of said pipe, and the free end of said outer lock ring (12) overlies on said tapered annular wall area whereby said outer lock ring (12) is shrinked radially inwardly to urge said inwardly protruding second pawls (123) against the outer surface of said pipe.

9. The pipe coupling according to claim 1 or 2,
wherein
said inner tubular member (4) has a radially outwardly extending terminal wall and a tapered annular wall inclining outwardly in axially outer direction;
said outer tubular member (5) has a radially inwardly extending terminal wall and a tapered annular wall inclining inwardly in axially outer direction, the inner and outer tubular member defining a space (13) for accommodating an end of pipe therebetween;
said pipe coupling further comprising
a tubular inner lock ring (11) having a plurality of cantilever strips each having a free end separated by a plurality of axially extending slits (111), the inner lock ring (11) carrying a plurality of radially outwardly protruding first pawls (112) for applying a pressure against the inner surface of said pipe upon elastic deformation of the inner lock ring and a plurality of radially outwardly protruding second pawls (113) at said free end for locking said pipe when withdrawing the pipe, said inner lock ring (11) being movable in said space (13) for accommodating the pipe between said terminal wall and said tapered annular wall; and
a tubular outer lock ring (12) having a plurality of cantilever strips each having a free end separated by a plurality of axially extending slits (121), the outer lock ring (12) carrying a plurality of radially inwardly protruding first pawls (122) for applying a pressure against the outer surface of said pipe upon elastic deformation of the outer lock ring and a plurality of radially inwardly protruding second pawls (123) at said free end for locking said pipe when withdrawing the pipe, said outer lock ring (12) being movable in said space (13) for accommodating the pipe between said terminal wall and said tapered annular wall;
wherein, when said pipe is inserted in said space (13) for accommodating the pipe in place and then moved in a direction for withdrawing the pipe, said inner lock ring (11) is moved together with the pipe in the same direction as a consequence of the engagement of said outwardly protruding first pawls (112) with the inner surface of said pipe, and the free end of said inner lock ring (11) overlies on said tapered annular wall area whereby said inner lock ring (11) is expanded radially outwardly to urge said outwardly protruding second pawls (113) against the inner surface of said pipe; and said outer lock ring (12) is moved together with the pipe in the same direction as a consequence of the engagement of said inwardly protruding first pawls (122) with the outer surface of said pipe, and the free end of said outer lock ring (12) overlies on said tapered annular wall area whereby said outer lock ring (12) is shrinked radially inwardly to urge said inwardly protruding second pawls (123) against the outer surface of said pipe.

10. The pipe coupling according to claim 2, comprising
a lock ring (11, 12) having a plurality of pointed pawls (112, 113, 122, 123) for preventing the withdrawal of said pipe by being urged against the inner and/or outer surface of said pipe.

## Patentansprüche

1. Rohrkupplung (1) mit einem Hauptkörper (3), einem inneren Röhrenteil (4), das sich vom Hauptkörper axial nach außen erstreckt, einem äußeren Röhrenteil (5), welches das innere Röhrenteil (4) konzentrisch umgibt und einen Raum (13) zur Aufnahme eines Röhrenendes im Zusammenwirken mit dem inneren Röhrenteil (4) definiert, und Mitteln (6) zur Bestätigung des Zustandes des in die Rohrkupplung eingesteckten Rohrs, wobei die Bestätigungsmittel (6) umfassen:
wenigstens eine Bohrung (50), welche durch die Wand des äußeren Röhrenteils (5) definiert ist;
wenigstens eine Rille (71), die axial von der Bohrung nach innen führt und auf der Innenfläche des äußeren Röhrenteils (5) definiert ist; und
ein Bestätigungselement (8), das die Form eines C-Rings oder O-Rings aufweist und axial verschiebbar in dem Aufnahmeraum (13) aufgenommen wird und wenigstens ein Stabteil (81) trägt, das sich radial von dessen Umfangskante weg erstreckt, wobei das Stabteil aus der Bohrung (50) herausragt, bevor ein Rohr eingesetzt wird, und ins Innere des äußeren Röhrenteils (5) gezogen und in der Rille (71) aufgenommen wird, sobald das Bestätigungselement durch das distale Ende des Rohrs axial nach innen gedrückt wird, wenn das Rohr eingesetzt wird.

2. Rohrkupplung gemäß Anspruch 1, wobei die Bestätigungsposition des Rohrs bezogen auf den Aufnahmeraum (13) wunschgemäß geändert werden kann, indem man die Länge des Stabteils (81) anpasst.

3. Rohrkupplung gemäß Anspruch 1 oder 2, wobei die Rille (71) gebildet wird, indem man eine Hülse (7), die wenigstens einen axial verlaufenden Schlitz (71) aufweist, ins Innere des äußeren Röhrenteils (5) einpasst.

4. Rohrkupplung gemäß Anspruch 1 oder 2, wobei das Stabteil (81) im Querschnitt die Form einer flachen Platte aufweist.

5. Rohrkupplung gemäß Anspruch 1 oder 2, wobei das Bestätigungselement (8) aus einem thermoplastischen Elastomer oder einem synthetischen oder natürlichen Kautschuk besteht.

6. Rohrkupplung gemäß Anspruch 1 oder 2, wobei wenigstens ein Dichtungsring (15, 15') auf der Außenfläche des inneren Röhrenteils (4) oder auf der Innenfläche des äußeren Röhrenteils (5) vorgesehen ist, um eine hermetische Abdichtung zwischen dem Rohr und dem inneren oder äußeren Röhrenteil herzustellen.

7. Rohrkupplung gemäß Anspruch 1 oder 2, wobei das innere Röhrenteil (4) eine sich radial nach außen erstreckende Stirnwand und eine sich verjüngende ringförmige Wand aufweist, die in axialer, nach außen weisender Richtung nach außen geneigt ist, wobei das innere und das äußere Röhrenteil (4, 5) den Raum (13) zur Aufnahme eines Rohrendes zwischen sich definieren,
wobei die Rohrkupplung außerdem einen röhrenförmigen inneren Sicherungsring (11) umfasst, der zahlreiche freitragende Streifen mit jeweils einem freien Ende aufweist, die durch zahlreiche axial verlaufende Schlitze (111) voneinander getrennt sind, wobei der innere Sicherungsring (11) zahlreiche radial nach außen vorspringende erste Klauen (112) trägt, um Druck gegen die Innenfläche des Rohrs bei elastischer Verformung des inneren Sicherungsrings auszuüben, und zahlreiche radial nach außen vorspringende zweite Klauen (113) an dem freien Ende aufweist, um das Rohr zu sperren, wenn das Rohr herausgezogen wird, wobei der innere Sicherungsring (11) in dem Raum zur Aufnahme des Rohrs zwischen der Stirnwand und der sich verjüngenden Ringwand beweglich ist;
wobei, wenn das Rohr in den Raum (13) zur Aufnahme des Rohrs eingesetzt und dann in eine Richtung zum Herausziehen des Rohrs bewegt wird, der innere Sicherungsring (11) aufgrund des Eingreifens der nachaußen vorspringenden ersten Klauen (112) in die Innenfläche des Rohrs zusammen mit dem Rohr in die gleiche Richtung bewegt wird, und das freie Ende des inneren Sicherungsrings (11) auf dem Bereich der sich verjüngenden Ringwand aufliegt, wobei der innere Sicherungsring (11) radial nach außen ausgedehnt wird, um die nach außen vorspringenden zweiten Klauen (113) gegen die Innenfläche des Rohrs zu drücken.

8. Rohrkupplung gemäß Anspruch 1 oder 2, wobei das äußere Röhrenteil (5) eine sich radial nach innen erstreckende Stirnwand und eine sich verjüngende Ringwand aufweist, die in axial nach außen weisender Richtung nach innen geneigt ist, wobei die inneren und äußeren Röhrenteile (4, 5) den Raum (13) zur Aufnahme eines Rohrendes zwischen sich definieren,
wobei die Rohrkupplung außerdem einen röhrenförmigen äußeren Sicherungsring (12) mit zahlreichen freitragenden Streifen mit jeweils einem freien Ende aufweist, die durch zahlreich verlaufende Schlitze (121), voneinander getrennt sind, wobei der äußere Sicherungsring (12) zahlreiche radial nach innen vorspringende erste Klauen (122) trägt, um Druck gegen die Außenfläche des Rohrs bei elastischer Verformung des äußeren Sicherungsrings (12) auszuüben, und zahlreiche radial nach innen vorspringende zweite Klauen (123) an dem freien Ende, um das Rohr zu blockieren, wenn das Rohr herausgezogen wird, wobei der äußere Sicherungsring (12) in dem Raum (13) zur Aufnahme des Rohr zwischen der Stirnwand und der sich verjüngenden Ringwand beweglich ist;
wobei, wenn das Rohr in den Raum (13) zur Aufnahme des Rohrs eingesetzt wird und dann in eine Richtung zum Herausziehen des Rohrs bewegt wird, der äußere Sicherungsring (12) infolge des Eingreifens der nach innen vorspringenden ersten Klauen (122) in die Außenfläche des Rohrs zusammen mit dem Rohr in die gleiche Richtung bewegt wird und das freie Ende des äußeren Sicherungsrings (12) auf einem Bereich der sich verjüngenden Ringwand aufliegt, wobei der äußere Sicherungsring (12) radial nach innen zusammengezogen wird, um die nach innen vorspringenden zweiten Klauen (123) gegen die Außenfläche des Rohrs zu drücken.

9. Rohrkupplung gemäß Anspruch 1 oder 2, wobei
das innere Röhrenteil (4) eine radial nach außen verlaufende Stirnwand und eine sich verjüngende Ringwand aufweist, die in axial nach außen weisender Richtung nach außen geneigt ist;
wobei das äußere Röhrenteil (5) eine radial nach innen verlaufende Stirnwand und eine sich verjüngende Ringwand aufweist, die in axial nach außen weisender Richtung nach innen geneigt ist, wobei die inneren und äußeren Röhrenteile einen Raum (13) zur Aufnahme eines Rohrendes zwischen sich definieren;
wobei die Rohrkupplung außerdem umfasst
einen röhrenförmigen inneren Sicherungsring (11), der zahlreiche freitragende Streifen mit jeweils einem freien Ende aufweist, die durch zahlreiche axial verlaufende Schlitze (111) getrennt sind, wobei der innere Sicherungsring (11) zahlreiche radial nach außen vorspringende erste Klauen (112) trägt, um Druck gegen die Innenfläche des Rohrs bei elastischer Verformung des inneren Sicherungsrings auszuüben, und zahlreiche radial nach außen vorspringende zweite Klauen (113) an dem freien Ende zum Blockieren des Rohrs, wenn das Rohr herausgezogen wird, wobei der innere Sicherungsring (11) in dem Raum (13) zur Aufnahme des Rohrs zwischen der Stirnwand und der sich verjüngenden Ringwand beweglich ist; und
einen röhrenförmigen äußeren Sicherungsring (12), der zahlreiche freitragende Streifen mit einem freien Ende aufweist, die durch zahlreiche axial verlaufende Schlitze (121) voneinander getrennt sind, wobei der äußere Sicherungsring (12) zahlreiche radial nach innen vorspringende erste Klauen (122) trägt, um Druck gegen die Außenfläche des Rohrs bei elastischer Verformung des äußeren Sicherungsrings auszuüben, und zahlreiche radial nach innen vorspringende zweite Klauen (123) an dem freien Ende zum Blockieren des Rohrs, wenn das Rohr herausgezogen wird, wobei der äußere Sicherungsring (12) in dem Raum (13) zur Aufnahme des Rohrs zwischen der Stirnwand und der sich verjüngenden Ringwand beweglich ist;
wobei, wenn das Rohr in den Raum (13) zur Aufnahme des Rohrs eingesetzt und dann in eine Richtung zum Herausziehen des Rohrs bewegt wird, der innere Sicherungsring (11) infolge des Eingreifens der nach außen vorspringenden ersten Klauen (112) in die Innenfläche des Rohrs zusammen mit dem Rohr in die gleiche Richtung bewegt wird und das freie Ende des inneren Sicherungsrings (11) auf einem Bereich der sich verjüngenden Ringwand aufliegt, wodurch der innere Sicherungsring (11) radial nach außen ausgedehnt wird, um die nach außen vorspringenden zweiten Klauen (113) gegen die Innenfläche des Rohrs zu drücken; wobei der äußere Sicherungsring (12) infolge des Eingreifens der nach innen vorspringenden ersten Klauen (122) mit der Außenfläche des Rohrs in die gleiche Richtung wie das Rohr bewegt wird, und das freie Ende des äußeren Sicherungsrings (12) auf dem Bereich der sich verjüngenden Ringwand aufliegt, wobei der äußere Sicherungsring (12) radial nach innen zusammengezogen wird, um die nach innen vorspringenden zweiten Klauen (123) gegen die Außenfläche des Rohrs zu drücken.

10. Rohrkupplung gemäß Anspruch 2, umfassend
einen Sicherungsring (11, 12), der zahlreiche spitze Klauen (112, 113, 122, 123) aufweist, um das Herausziehen des Rohrs zu verhindern, indem sie gegen die Innen- und/oder Außenfläche des Rohrs gedrückt werden.

## Revendications

1. Raccord de tuyaux (1) comprenant un corps principal (3), un élément tubulaire interne (4) s'étendant à partir du corps principal axialement vers l'extérieur, un élément tubulaire externe (5) entourant de manière concentrique l'élément tubulaire interne (4) pour définir un espace (13) afin de loger une extrémité de tuyau en coopération avec l'élément tubulaire interne (4) et des moyens (6) pour confirmer l'état du tuyau inséré dans ledit raccord de tuyaux, dans lequel lesdits moyens de confirmation (6) comprennent:
au moins un alésage (50) défini à travers la paroi dudit élément tubulaire externe (5);
au moins une rainure (71) s'étendant de manière axiale à partir dudit alésage vers l'intérieur et définie sur la surface interne dudit élément tubulaire externe (5); et
un élément de confirmation (8) ayant une forme de C ou torique reçu de manière axialement coulissante dans ledit espace de logement (13) et portant au moins un élément de tige (81) s'étendant radialement à partir de son bord périphérique, ledit élément de tige faisant saillie hors dudit alésage (50) avant d'insérer un tuyau et étant tiré à l'intérieur de l'élément tubulaire externe (5) et reçu dans ladite rainure (71) lorsque ledit élément de confirmation est poussé axialement vers l'intérieur par l'extrémité distale dudit tuyau lorsque ledit tuyau est inséré.

2. Raccord de tuyaux selon la revendication 1, dans lequel la position de confirmation dudit tuyau par rapport audit espace de logement (13) peut être modifiée, si nécessaire, en ajustant la longueur dudit élément de tige (81).

3. Raccord de tuyaux selon la revendication 1 ou 2, dans lequel ladite rainure (71) est formée en montant un manchon (7) ayant au moins une fente (71) s'étendant de manière axiale à l'intérieur dudit élément tubulaire externe (5).

4. Raccord de tuyaux selon la revendication 1 ou 2, dans lequel ledit élément de tige (81) a une forme de feuille plate en section transversale.

5. Raccord de tuyaux selon la revendication 1 ou 2, dans lequel ledit élément de confirmation (8) est réalisé avec un élastomère thermoplastique, ou du caoutchouc synthétique ou naturel.

6. Raccord de tuyaux selon la revendication 1 ou 2, dans lequel au moins une bague d'étanchéité (15, 15') est prévue sur la surface externe dudit élément tubulaire interne (4) ou sur la surface interne dudit élément tubulaire externe (5) pour réaliser une fermeture hermétique entre le tuyau et ledit élément tubulaire interne ou externe.

7. Raccord de tuyaux selon la revendication 1 ou 2, dans lequel ledit élément tubulaire interne (4) a une paroi terminale s'étendant radialement vers l'extérieur et une paroi annulaire progressivement rétrécie s'inclinant vers l'extérieur dans la direction axialement externe; les éléments tubulaires interne et externe (4, 5) définissant ledit espace (13) pour loger une extrémité de tuyau entre eux,
ledit raccord de tuyaux comprenant en outre une bague de verrouillage interne tubulaire (11) ayant une pluralité de bandes en porte-à-faux, ayant chacune une extrémité libre séparée par une pluralité de fentes (111) s'étendant de manière axiale, la bague de verrouillage interne (11) portant une pluralité de premiers cliquets (112) en saillie radialement vers l'extérieur pour appliquer une pression contre la surface interne dudit tuyau suite à la déformation élastique de la bague de verrouillage interne et une pluralité de seconds cliquets (113) en saillie radialement vers l'extérieur au niveau de ladite extrémité libre pour verrouiller ledit tuyau lors du retrait du tuyau, ladite bague de verrouillage interne (11) étant mobile dans ledit espace pour loger le tuyau entre ladite paroi terminale et ladite paroi annulaire progressivement rétrécie;
dans lequel, lorsque ledit tuyau est inséré dans ledit espace(13) pour loger le tuyau en place et ensuite déplacé dans une direction pour retirer le tuyau, ladite bague de verrouillage interne (11) est déplacée conjointement avec le tuyau dans la même direction suite à la mise en prise desdits premiers cliquets (112) en saillie vers l'extérieur avec la surface interne dudit tuyau, et l'extrémité libre de ladite bague de verrouillage interne (11) recouvre ladite zone de paroi annulaire progressivement rétrécie moyennant quoi ladite bague de verrouillage interne (11) est expansée radialement vers l'extérieur pour pousser lesdits seconds cliquets (113) en saillie vers l'extérieur contre la surface interne dudit tuyau.

8. Raccord de tuyaux selon la revendication 1 ou 2, dans lequel ledit élément tubulaire externe (5) a une paroi terminale s'étendant radialement vers l'intérieur et une paroi annulaire progressivement rétrécie s'inclinant vers l'intérieur dans la direction axialement externe, les éléments tubulaires interne et externe (4, 5) définissant ledit espace (13) pour loger une extrémité de tuyau entre eux,
ledit raccord de tuyaux comprenant en outre une bague de verrouillage tubulaire externe (12) ayant une pluralité de bandes en porte-à-faux ayant chacune une extrémité libre séparée par une pluralité de fentes (121) s'étendant de manière axiale, la bague de verrouillage externe (12) portant une pluralité de premiers cliquets (122) en saillie radialement vers l'intérieur pour appliquer une pression contre la surface externe dudit tuyau suite à la déformation élastique de la bague de verrouillage externe (12) et une pluralité de seconds cliquets (123) en saillie radialement vers l'intérieur au niveau de ladite extrémité libre pour verrouiller ledit tuyau lors du retrait du tuyau, ladite bande de verrouillage externe (12) étant mobile dans ledit espace (13) pour loger le tuyau entre ladite paroi terminale et ladite paroi annulaire progressivement rétrécie;
dans lequel, lorsque ledit tuyau est inséré dans ledit espace (13) pour loger le tuyau en place et ensuite déplacé dans une direction pour retirer le tuyau, ladite bague de verrouillage externe (12) est déplacée conjointement avec le tuyau dans la même direction suite à la mise en prise desdits premiers cliquets (122) en saillie vers l'intérieur avec la surface externe dudit tuyau, et l'extrémité libre de ladite bague de verrouillage externe (12) recouvre ladite zone de paroi annulaire progressivement rétrécie moyennant quoi ladite bague de verrouillage externe (12) est rétrécie radialement vers l'intérieur pour pousser lesdits seconds cliquets (123) en saillie vers l'intérieur contre la surface externe dudit tuyau.

9. Raccord de tuyaux selon la revendication 1 ou 2, dans lequel:
ledit élément tubulaire interne (4) a une paroi terminale s'étendant radialement vers l'extérieur et une paroi annulaire progressivement rétrécie s'inclinant vers l'extérieur dans la direction axialement externe;
ledit élément tubulaire externe (5) a une paroi terminale s'étendant radialement vers l'intérieur et une paroi annulaire progressivement rétrécie s'inclinant vers l'intérieur dans la direction axialement externe, les éléments tubulaires interne et externe définissant un espace (13) afin de loger une extrémité de tuyau entre eux;
ledit raccord de tuyaux comprenant en outre:
une bague de verrouillage interne tubulaire (11) ayant une pluralité de bandes en porte-à-faux ayant chacune une extrémité libre séparée par une pluralité de fentes (111) s'étendant de manière axiale, la bague de verrouillage interne (11) portant une pluralité de premiers cliquets (112) en saillie radialement vers l'extérieur pour appliquer une pression contre la surface interne dudit tuyau suite à la déformation élastique de la bague de verrouillage interne et une pluralité de seconds cliquets (113) en saillie radialement vers l'extérieur au niveau de ladite extrémité libre pour verrouiller ledit tuyau lors du retrait du tuyau, ladite bague de verrouillage interne (11) étant mobile dans ledit espace (13) pour loger le tuyau entre ladite paroi terminale et ladite paroi annulaire progressivement rétrécie; et
une bague de verrouillage tubulaire externe (12) ayant une pluralité de bandes en porte-à-faux ayant chacune une extrémité libre séparée par une pluralité de fentes (121) s'étendant de manière axiale, la bague de verrouillage externe (12) portant une pluralité de premiers cliquets (122) en saillie radialement vers l'intérieur pour appliquer une pression contre la surface externe dudit tuyau suite à la déformation élastique de la bague de verrouillage externe et une pluralité de seconds cliquets (123) en saillie radialement vers l'intérieur au niveau de ladite extrémité libre pour verrouiller ledit tuyau lors du retrait du tuyau, ladite bague de verrouillage externe (12) étant mobile dans ledit espace (13) pour loger le tuyau entre ladite paroi terminale et ladite paroi annulaire progressivement rétrécie;
dans lequel, lorsque ledit tuyau est inséré dans ledit espace (13) pour loger le tuyau en place et ensuite déplacé dans une direction pour retirer le tuyau, ladite bague de verrouillage interne (11) est déplacée conjointement avec le tuyau dans la même direction suite à la mise en prise desdits premiers cliquets (112) en saillie vers l'extérieur avec la surface interne dudit tuyau, et l'extrémité libre de ladite bague de verrouillage interne (11) recouvre ladite zone de paroi annulaire progressivement rétrécie moyennant quoi ladite bague de verrouillage interne (11) est expansée radialement vers l'extérieur pour pousser lesdits seconds cliquets (113) en saillie vers l'extérieur contre la surface interne dudit tuyau; et ladite bague de verrouillage externe (12) est déplacée conjointement avec le tuyau dans la même direction, suite à la mise en prise desdits premiers cliquets (122) en saillie vers l'intérieur avec la surface externe dudit tuyau, et l'extrémité libre de ladite bague de verrouillage externe (12) recouvre ladite zone de paroi annulaire progressivement rétrécie moyennant quoi ladite bague de verrouillage externe (12) est rétrécie radialement vers l'intérieur pour pousser lesdits seconds cliquets (123) en saillie vers l'intérieur contre la surface externe dudit tuyau.

10. Raccord de tuyaux selon la revendication 2, comprenant:
une bague de verrouillage (11, 12) ayant une pluralité de cliquets pointus (112, 113, 122, 123) pour empêcher le retrait dudit tuyau en étant poussé contre la surface interne et/ou externe dudit tuyau.
